# EUROPÄISCHE PATENTSCHRIFT

(11) **EP 3 512 792 B1**
(45) Veröffentlichungstag und Bekanntmachung des Hinweises auf die Patenterteilung: **18.06.2025**
(21) Anmeldenummer: 17764835.9
(22) Anmeldetag: 12.09.2017
(51) Int. Cl.: B66B 1/46, H04W 88/08

(54) **HYBRIDES STOCKWERKTERMINAL FÜR EINE AUFZUGSANLAGE**
HYBRID FLOOR TERMINAL FOR AN ELEVATOR SYSTEM
TERMINAL D'ÉTAGE HYBRIDE POUR UNE INSTALLATION D'ASCENSEUR

(30) Priorität: 13.09.2016 EP 16188435
(43) Veröffentlichungstag der Anmeldung: 24.07.2019
(73) Patentinhaber: INVENTIO AG, 6052 Hergiswil (CH)
(72) Erfinder: TROESCH, Florian, 8045 Zürich (CH)
(74) Vertreter: Inventio AG
(86) Internationale Anmeldenummer: PCT/EP2017/072925
(87) Internationale Veröffentlichungsnummer: WO 2018/050654

(56) Entgegenhaltungen:
- WO-A1-2015/049414
- WO-A1-2015/177020
- US-A1- 2012 267 203

## Beschreibung

Die hier beschriebene Technologie betrifft allgemein Aufzugsanlagen und deren Betrieb in Gebäuden. Ausführungsbeispiele der Technologie betreffen insbesondere ein Stockwerkterminal für eine Aufzugsanlage, und ein Verfahren zum Installieren eines Kommunikationssystems in einem Gebäude, in dem eine Aufzugsanlage vorgesehen ist.

In Gebäuden mit Aufzugsanlagen sind auf den einzelnen Stockwerken Aufzugsbedienterminals angeordnet, mit denen ein Nutzer einen Aufzug rufen kann. In einer bekannten Aufzugsanlage hat ein Aufzugsbedienterminal Auf/Ab Tasten, um die gewünschte Fahrtrichtung einzugeben. In einer anderen Aufzugsanlage kann der Nutzer an einem Aufzugsbedienterminal bereits auf dem Stockwerk das Zielstockwerk eingeben. Dafür kann das Aufzugsbedienterminal eine Tastatur, einen berührungsempfindlichen Bildschirm und/oder eine Datenerfassungseinrichtung (z.B. in Form eines aus EP 0699617 B1 bekannten RFID Kartenlesers) haben. Auf Stockwerken angeordnete Aufzugsbedienterminals zur Eingabe von Zielstockwerken sind beispielsweise in WO 2015/177020 A1 offenbart. Daneben offenbart WO 2015/177020 A1 elektronische Türschlösser als weitere Beispiele für Terminals.

Auch WO 2015/049414 A1 offenbart ein auf einem Stockwerk angeordnetes Aufzugsbedienterminals zur Eingabe eines Zielstockwerks, das mit einer Rufsteuerung verbunden ist. Räumlich getrennt davon ist eine Basisstation angeordnet, die mit einem mobilen Kommunikationsnetzwerk verbunden ist. Das mobile Kommunikationsnetzwerk wird in Verbindung mit der Bestimmung der Laufzeit und Position eines Passagiers genutzt, während ein Passagier von Raum zu Raum in Richtung des Aufzugs geht.

Die Aufzugsbedienterminals dieser bekannten Aufzugsanlagen sind in ihrer Funktionalität beschränkt auf die Rufeingabe. Moderne Gebäude erfordern jedoch zusätzliche Funktionalität. Es besteht daher Bedarf an einer zusätzlichen Technologie, um die Anforderungen moderner Gebäude besser erfüllen zu können.

Ein Aspekt betrifft ein Stockwerkterminal für eine Aufzugsanlage in einem Gebäude. Das Stockwerkterminal umfasst ein Aufzugsbedienterminal und ein Funk-Netzwerkgerät. Das Aufzugsbedienterminal hat ein Nutzerinterface zum Rufen einer Aufzugskabine, ein Aufzugsdateninterface für eine Datenkommunikation mit einer Aufzugssteuerung und eine Verarbeitungseinrichtung, die mit dem Nutzerinterface und dem Aufzugsdateninterface gekoppelt ist. Das Funk-Netzwerkgerät hat einen Funktransceiver für eine Kommunikation mit einer auf einem Stockwerk vorhanden Kommunikationseinrichtung, ein Dateninterface für eine Datenkommunikation mit dem Netzwerkzugangspunkt und eine Verarbeitungseinrichtung, die mit dem Funktransceiver und dem Dateninterface gekoppelt ist.

Ein zusätzlicher Aspekt betrifft ein Verfahren zum Installieren eines Kommunikationssystems in einem Gebäude, in dem eine Aufzugsanlage vorgesehen ist. Die Stockwerkterminals werden an festgelegten Orten im Gebäude installiert, wobei jedes Stockwerkterminal ein Aufzugsbedienterminal und ein Funk-Netzwerkgerät hat. Das Aufzugsbedienterminal hat ein Aufzugsdateninterface für eine Datenkommunikation mit einer Aufzugssteuerung und das Funk-Netzwerkgerät hat ein Dateninterface für eine Datenkommunikation mit einem Netzwerkzugangspunkt. Ein Netzwerk wird in einem Aufzugsschacht installiert, und jedes Dateninterface und jedes Aufzugsdateninterface eines Stockwerkterminals wird mit dem Netzwerk verbunden.

Durch die hier beschriebene Technologie wird ein Stockwerkterminal geschaffen, das nicht nur die Funktionalität eines Aufzugsbedienterminals hat, sondern zusätzlich die Funktionalität eines Funk-Netzwerkgerätes. Das Funk-Netzwerkgerät ermöglicht auf jedem Stockwerk eine Funkkommunikation zwischen dem Funk-Netzwerkgerät und einer auf einem Stockwerk vorhandenen Kommunikationseinrichtung. Da das Funk-Netzwerkgerät mit einem Datennetzwerk verbunden ist, ermöglicht es allgemein die Kommunikation der Kommunikationseinrichtungen über das Datennetzwerk, beispielsweise in Verbindung mit Gebäudemanagementaufgaben und/oder Zugang zum Internet.

In einem Ausführungsbeispiel des Verfahrens umfasst das Netzwerk ein Datennetzwerk und ein Aufzugssteuerungsnetzwerk. Zumindest das Datennetzwerk ist in einem Ausführungsbeispiel zumindest teilweise im Aufzugsschacht angeordnet. Je nach Anwendungsfall kann auch das Netzwerk im Wesentlichen im Aufzugsschacht angeordnet sein. Da der Aufzugsschacht für berechtigte Personen zugänglich ist, kann das Netzwerk bzw. das Datennetzwerk mit geringem technischen und finanziellen Aufwand installiert werden. Die Installation des Datennetzwerks kann z.B. dann erfolgen, wenn auch das Aufzugssteuerungsnetzwerk im Aufzugsschacht installiert wird.

Die Installation des Datennetzwerks im Aufzugsschacht ist insbesondere bei einer Modernisierung des Gebäudes von Vorteil. Ein Beispiel einer solchen Modernisierung ist die Umrüstung der Aufzugsanlage von einer konventionellen Auf/Ab Rufsteuerung zu einer Zielrufsteuerung. Da dabei auch die Aufzugsbedienterminals erneuert werden, können die Stockwerkterminals gemäss der hier beschriebenen Technologie an den gewünschten Stellen auf den Stockwerken installiert und das Datennetzwerk im Aufzugsschacht verlegt werden. Die zusätzliche Funktionalität eines Funk-Netzwerkgerätes wird daher ohne ein aufwendiges Verlegen des Datennetzes im Gebäude ausserhalb des Aufzugsschachts erreicht.

In einem Ausführungsbeispiel ist das Datennetzwerk physisch getrennt vom Aufzugssteuerungsnetzwerk. Dies bedeutet z.B., dass jedes dieser Netzwerke eigene Leitungen oder ein eigenes Leitungsnetz hat, so dass eine Datenübertragung im Datennetzwerk getrennt von einer Datenübertragung im Aufzugssteuerungsnetzwerk erfolgt. Jedes Netzwerk kann daher individuell für die gewünschte Anwendung ausgelegt bzw. optimiert werden, beispielsweise hinsichtlich des Leitungs- oder Kabeltyps oder der Art der Datenübertragung oder deren Geschwindigkeit. In einem anderen Ausführungsbeispiel sind das Datennetzwerk und das Aufzugssteuerungsnetzwerk in einem Netzwerk zusammengefasst.

In einem Ausführungsbeispiel ist das Funk-Netzwerkgerät ein WLAN (WiFi) Router, der als Schnittstelle zwischen dem Datennetzwerk und dem Funknetz dient. Dabei ist es von Vorteil, dass WLAN Router allgemein bekannt sind und entsprechend oft verwendet werden. Kommunikationseinrichtungen, die zur Kommunikation mit WLAN Routern vorgesehen sind, finden somit ebenfalls häufig Verwendung, beispielsweise in mobilen Kommunikationsgeräten (z.B. Mobiltelefon, Smartphones, Tablet PCs) für den Zugang zum Internet.

Die Technologie bietet Flexibilität hinsichtlich der Art der im Gebäude vorhandenen Kommunikationseinrichtungen. Die Kommunikationseinrichtung kann Teil einer elektronischen Gebäudekomponente sein, beispielsweise einer Gegensprechanlage, einer elektronischen Schliessanlage, einem Zugangskontrollsystem, einem Videoüberwachungssystem oder einer Gefahrenmeldeanlage. Die Kommunikationseinrichtung kann ausserdem Teil eines mobilen Kommunikationsgeräts (z.B. Smartphone, Tablet PCs) sein, das sich z.B. vorrübergehend auf einem Stockwerk befindet.

Flexibilität besteht auch hinsichtlich der Kommunikation über das Datennetzwerk. Der dem Datennetz zugeordnete Netzwerkzugangspunkts ermöglicht wahlweise eine Kommunikation zwischen einer Kommunikationseinrichtung auf einem Stockwerk und einer Gebäudeeinrichtung oder dem gebäudeexternen Kommunikationsnetzwerk. Entsprechend den Möglichkeiten für die Kommunikationseinrichtungen, kann eine Gebäudeeinrichtung Teil einer elektronischen Gebäudekomponente sein, beispielsweise einer Gegensprechanlage, einer elektronischen Schliessanlage, eines Zugangskontrollsystems, eines Videoüberwachungssystems oder einer Gefahrenmeldeanlage.

Ausserdem besteht Gestaltungsfreiheit hinsichtlich der Anordnung der Stockwerkterminals. In einem Ausführungsbeispiel hat ein Stockwerkterminal ein Gehäuse, in dem das Aufzugsbedienterminmal und das Funk-Netzwerkgerät angeordnet sind. Das Gehäuse kann an einer Gebäudewand, einem Stockwerkfussboden (z.B. als stehende Struktur) oder einem Teil der Aufzugsanlage, der auf einem Stockwerk für einen Nutzer zugänglich ist (z.B. am Rahmen einer Schachtür), angeordnet sein. Je nach Gestaltung des Gehäuses kann für einen Nutzer nur die Funktionalität eines Aufzugsterminals erkennbar sein (sichtbar ist z.B. nur ein Touchscreen oder eine Tastatur), wobei ihm die Funktionalität eines Funk-Netzwerkgerätes verborgen bleibt.

Im Folgenden sind verschiedene Aspekte der verbesserten Technologie anhand von Ausführungsbeispielen in Verbindung mit den Figuren näher erläutert. In den Figuren haben gleiche Elemente gleiche Bezugszeichen. Es zeigen:
- Fig. 1: eine schematische Darstellung einer beispielhaften Situation in einem Gebäude mit mehreren Stockwerken und einer Aufzugsanlage;
- Fig. 2: eine schematische Darstellung eines Ausführungsbeispiels eines Stockwerkterminals; und
- Fig. 3: eine beispielhafte Darstellung eines Verfahrens zum Installieren eines Kommunikationssystems in einem Gebäude.

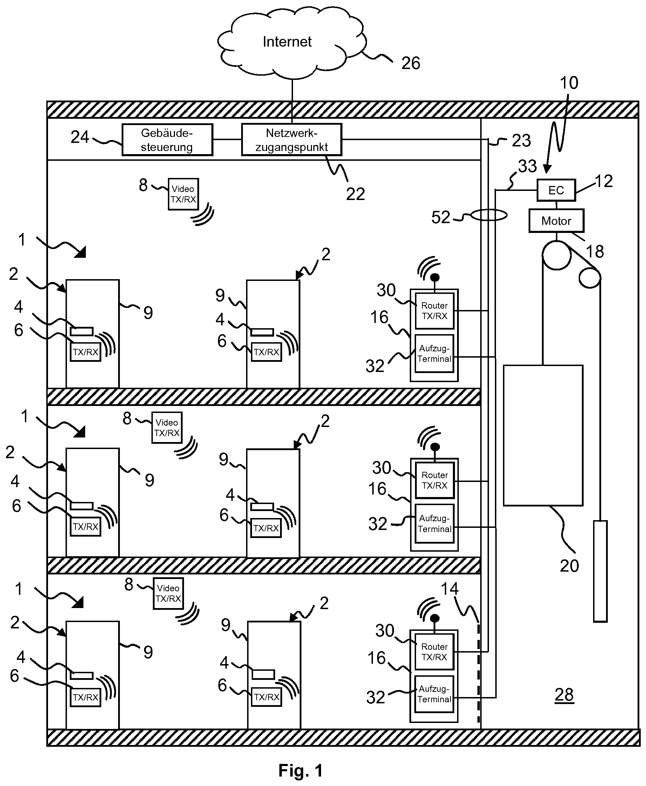

Fig. 1 ist eine schematische Darstellung einer beispielhaften Situation in einem Gebäude, das mehrere Stockwerke 1 hat, die von einer Aufzugsanlage 10 bedient werden. Aus Darstellungsgründen sind in Fig. 1 von der Aufzugsanlage 10 nur eine Aufzugssteuerung 12, ein Antriebsmotor 18 und eine in einem Schacht 28 verfahrbare Aufzugskabine 20, im Folgenden auch als Kabine 20 bezeichnet, gezeigt. Der Fachmann erkennt, dass die Aufzugsanlage 10 auch anders ausgestaltet sein kann, beispielsweise als eine mit mehreren Kabinen 20 in einem Schacht oder als Hydraulikaufzug. Der Schacht 28 ist auf jedem Stockwerk 1 in bekannter Weise durch eine Schachttür 14 abgetrennt (in Fig. 1 ist nur auf dem untersten Stockwerk die Schachttür 14 angedeutet). Auf jedem Stockwerk 1 sind mehrere Zugänge 2 (z.B. Türen 9, jeweils mit Türgriff/Türklinke 4) gezeigt, die beispielsweise Zutritt zu Wohnungen, Büroräumen oder anderen Zonen oder Räumen ermöglichen. Der Fachmann erkennt, dass ein Zugang 2 auch einer von evtl. mehreren Gebäudezugängen, Garageneinfahrten und/oder Grundstückszugängen/-fahrten sein kann.

Im gezeigten Ausführungsbeispiel ist auf jedem Stockwerk 1 ein Stockwerkterminal 16 angeordnet, das Teil eines Kommunikationssystems im Gebäude und an ein Netzwerk 52 gekoppelt ist. Der Fachmann erkennt, dass auch mehrere Stockwerkterminals 16 auf einem Stockwerk 1 angeordnet sein können. In Fig. 1 sind die Stockwerkterminals 16 in der Umgebung der jeweiligen Schachtüren 14 (z.B. an einer Gebäudewand oder auf dem Fussboden stehend) angeordnet, sie können aber auch davon entfernt an anderen Orten auf den Stockwerken 1 angeordnet oder in Türrahmen der Schachttüren 14 integriert sein.

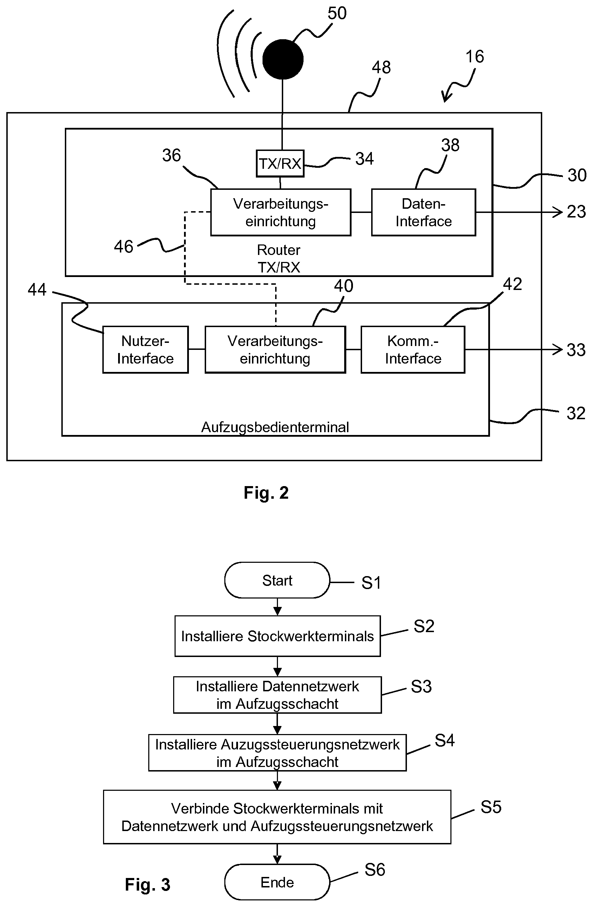

Wie in Fig. 1 gezeigt, enthält jedes Stockwerkterminal 16 ein Aufzugsbedienterminal 32 und ein Funk-Netzwerkgerät 30 (z.B. einen WLAN Router, wie in Verbindung mit Fig. 2 beschrieben). Jedes Aufzugsbedienterminal 32 und jedes Funk-Netzwerkgerät 30 ist an das Netzwerk 52 gekoppelt, wobei in der dargestellten Ausführung das Netzwerk 52 ein Aufzugssteuerungsnetzwerk 33 und ein Datennetzwerk 23 umfasst. In Fig. 1 ist jedes Aufzugsbedienterminal 32 an das Aufzugssteuerungsnetzwerk 33 gekoppelt, an das ausserdem die Aufzugssteuerung 12 gekoppelt ist, und jedes Funk-Netzwerkgerät 30 ist an das Datennetzwerk 23 gekoppelt, das einen Netzzugangspunkt 22 hat. An den Netzzugangspunkt wiederum können eine oder mehrere Gebäudesteuereinrichtungen 24 gekoppelt sein.

Das Netzwerk 52 kann z.B. je nach gebäudespezifischen Anforderungen unterschiedlich ausgestaltet sein. In einem Ausführungsbeispiel sind das Aufzugssteuerungsnetzwerk 33 und das Datennetzwerk 23 voneinander getrennt ausgeführt, so dass eine Datenübertragung im Datennetzwerk getrennt von einer Datenübertragung im Aufzugssteuerungsnetzwerk erfolgt. In einem anderen Ausführungsbeispiel sind das Aufzugssteuerungsnetzwerk 33 und das Datennetzwerk 23 im Netzwerk 52 zusammenfasst, beispielsweise sind sie physisch im Wesentlichen nicht getrennt; das Netzwerk 52 kann z.B. als Datenbussystem ausgeführt sein.

In der in Fig. 1 gezeigten Situation ist die hier beschriebene Technologie in vorteilhafter Weise anwendbar. Kurz und beispielhaft zusammengefasst dient das Stockwerkterminal 16 zum einen als Bedienterminal für die Aufzugsanlage 10 und zum anderen als drahtloser Zugangspunkt zum Datennetzwerk 23 für auf den Stockwerken 1 vorhandene Kommunikationseinrichtungen 6, 8. Der Zugangspunkt und das Datennetzwerk 23 können für Datenübertragungsraten im Gbit/s Bereich ausgelegt sein. Wegen der genannten Doppelfunktion ist das Stockwerkterminal 16 quasi ein hybrides Stockwerkterminal. Mit Hilfe des im Stockwerkterminal 16 integrierten Aufzugsbedienterminals 32 kann ein Nutzer wie in bekannten Aufzugsanlagen einen Fahrtwunsch eingeben. Je nach Ausgestaltung der Aufzugsanlage 10 kann der Nutzer eine gewünschte Fahrtrichtung (Auf/Ab) oder ein gewünschtes Zielstockwerk eingeben. Das Aufzugsbedienterminal 32 bestätigt dem Nutzer den eingegebenen Fahrtwunsch. Das ebenfalls im Stockwerkterminal 16 integrierte Funk-Netzwerkgerät 30 kommuniziert mittels Funkverbindungen mit den auf einem Stockwerken 1 vorhandenen Kommunikationseinrichtungen 6, 8 und stellt kommunikative Verbindungen zum Datennetzwerk 23 her.

Das Aufzugssteuerungsnetzwerk 33 dient zur bidirektionalen Kommunikation zwischen den einzelnen Aufzugsbedienterminals 30 und der Aufzugssteuerung 12. So wird ein am Aufzugsbedienterminal 32 von einem Nutzer eingegebener Ruf über das Aufzugssteuerungsnetzwerk 33 zur Aufzugssteuerung 12 übertragen. Handelt es sich beispielsweise um einen Zielruf, teilt die Aufzugssteuerung 12 dem Zielruf eine Kabine 20 zu und sendet über das Aufzugssteuerungsnetzwerk 33 einen Steuerbefehl an das Aufzugsbedienterminal 30, um den Nutzer über die zugewiesene Kabine 20 zu informieren, beispielsweise mittels eines Nutzerinterfaces des Aufzugsbedienterminals 30.

Das Aufzugssteuerungsnetzwerk 33 besteht in einem Ausführungsbeispiel aus einem leitungsgebundenen Datenbussystem. In vertikaler Richtung verläuft das Aufzugssteuerungsnetzwerk 33 im Gebäude innerhalb des Schachts 28. Die Kommunikation zwischen der Aufzugsteuerung 12 und den Aufzugsbedieneinrichtungen 32 erfolgt bei Verwendung eines solchen Datenbussystems gemäss einem Protokoll für leitungsgebundene Kommunikation, beispielsweise dem LonTalk-Protokoll, wenn das Datenbussystem auf dem LON Standard beruht (LON: Lokal Operating Network). Der Fachmann erkennt ausserdem, dass alternativ zu einem Datenbussystem jede Aufzugsbedieneinrichtungen 32 über eine separate Leitung mit der Aufzugsteuerung 12 verbunden sein kann.

Das Datennetzwerk 23 ist ein leitungsgebundenes Netz, das im Gebäude in vertikaler Richtung ebenfalls innerhalb des Schachts 28 verläuft. In einem Ausführungsbeispiel basiert das Datennetzwerk 23 auf der Ethernet Technologie, wobei die Datenübertragung gemäss dem Ethernet Protokoll erfolgt. Je nachdem, welcher Leitungstyp (z.B. Twisted-Pair Kabel oder Glasfaser-Kabel) für das Datennetzwerk 23 verwendet wird, sind Datenübertragungsraten von einigen Mbits/s bis zu mehreren Gbit/s möglich.

Eine Gebäudesteuereinrichtung 24 kann direkt an das Datennetzwerk 23 angeschlossen werden oder, wie in Fig. 1 gezeigt, indirekt über den Netzwerkzugangspunkt 22. Im in Fig. 1 gezeigten Ausführungsbeispiel ermöglicht der Netzwerkzugangspunkt 22 zusätzlich Zugang zu einem gebäude externen Kommunikationsnetzwerk 26, beispielsweise dem Internet. Eine an das Datennetzwerk 23 gekoppelte Gebäudesteuereinrichtung 24 kann Teil eines Gebäudemanagementsystems sein, das beispielsweise Aufgaben wahrnimmt, die für die Sicherheit im Gebäude relevant sind. Die Gebäudesteuereinrichtung 24 kann z.B. Teil einer Gegensprechanlage, einer Videoüberwachungseinrichtung, eines Zugangskontrollsystems, eines Gefahrenmeldesystems (z.B. für Einbruch- oder Brandmeldesysteme) oder eines anderen Gebäudeautomatisierungssystems (z.B. für Heizung, Lüftung und Klima) sein. Für ein Zugangskontrollsystem kann die Gebäudesteuereinrichtung 24 eine Datenbank enthalten, in der Profile von Personen gespeichert sind, die Zugang zum Gebäude haben.

In Fig. 1 ist an jedem der Zugänge 2 eine Kommunikationseinrichtung 6 vorhanden, wobei jede Kommunikationseinrichtung 6 einen Funktransceiver, d.h. eine Sende- und - empfangseinrichtung für Funksignale (in Fig. 1 durch "TX/RX" angedeutet) hat. Die Kommunikationseinrichtung 6 kann an der Tür 9 oder in der dahinterliegenden Zone oder Wohnung angeordnet sein, wobei in der Wohnung oder Zone auch mehrere Kommunikationseinrichtungen 6 angeordnet sein können. Die Kommunikationseinrichtung kann ausserdem Teil eines mobilen Kommunikationsgeräts (z.B. Smartphone, Tablet PCs) sein, das sich z.B. vorrübergehend auf einem Stockwerk befindet.

In einem Ausführungsbeispiel ist die Kommunikationseinrichtung 6 Teil einer elektronischen Schliessanlage, die beispielsweise gesteuert von einem Zugangskontrollsystem die Tür 9 je nach Bedarf verriegelt oder entsperrt. In einem anderen Ausführungsbeispiel ist die Kommunikationseinrichtung 6 Teil einer Gegensprechanlage, die z.B. für Sprach- und Bildübertragung geeignet ist. Im dargestellten Ausführungsbeispiel ist auf jedem Stockwerk 1 ausserhalb der Zonen, Räume oder Wohnungen, beispielsweise auf einem Stockwerkflur oder -gang, optional eine weitere Kommunikationseinrichtung 8 angeordnet. Diese Kommunikationseinrichtung 8 kann in einem Ausführungsbeispiel Teil einer Videoüberwachungseinrichtung sein. Jede Kommunikationseinrichtung 8 der Videoüberwachungseinrichtung hat einen Funksender und einen Funkempfänger; in Fig. 1 ist dies durch "Video TX/RX" angedeutet. Der Fachmann erkennt, dass die genannten Ausführungsbeispiele auch in Kombination im Gebäude implementiert sein können.

Ist die Kommunikationseinrichtung 6 Teil einer elektronischen Schliessanlage, kann sie wie in Fig. 1 gezeigt in Verbindung mit einer Tür 9 angeordnet sein. Die zum Betrieb der Kommunikationseinrichtung 6 oder anderer elektronischer Komponenten der Schliessanlage (z.B. eine Datenerfassungseinrichtung), die an der Tür 9 angeordnet sind, erforderliche elektrische Energie kann beispielsweise durch eine (interne) Batterie oder einen Anschluss an eine externe Stromversorgung (z. B. ein gebäudeinternes Stromnetz) zur Verfügung gestellt werden.

Die Datenerfassungseinrichtung erfasst Daten einer Person, z.B. einen von der Person eingegebenen PIN Code oder einen von einem Datenträger gelesenen elektronischen oder optischen Code, wenn die Person an einem Zugang 2 Einlass wünscht. Sind die Daten erfasst, kommuniziert die Kommunikationseinrichtung 6 mit dem Funk-Netzwerkgerät 30, um die Zugangsberechtigungen der Person überprüfen zu lassen, z.B. durch die Gebäudesteuereinrichtung 24. Die Gebäudesteuereinrichtung 24 prüft in einem Ausführungsbeispiel, ob der empfangene Code in ihrer Datenbank einer zugangsberechtigten Person zugeordnet ist. Ist dies der Fall und die Person somit zum Zutritt berechtigt, veranlasst die Gebäudesteuereinrichtung 24 das Entriegeln der betroffenen Tür 9, um der Person Einlass zu gewähren. Weitere Details der Datenerfassungseinrichtung sind an anderer Stelle in Verbindung mit Fig. 2 beschrieben.

Fig. 2 zeigt eine schematische Darstellung eines Ausführungsbeispiels eines Stockwerkterminals 16, wobei Details des Aufzugsbedienterminals 30 und des Funk-Netzwerkgerätes 30 gezeigt sind. Das Aufzugsbedienterminal 30 und das Funk-Netzwerkgerät 30 sind in einem Gehäuse 48 angeordnet. Eine in Fig. 2 gezeigte Antenne 50 des Funk-Netzwerkgerätes 30 kann vollkommen im Gehäuse 48 oder ausserhalb des Gehäuses 48 angeordnet sein. Das Gehäuse 48 kann auf verschiedene Art und Weise gestaltet werden, um z.B. die Anforderungen an die Benutzerfreundlichkeit und das Design zu erfüllen. Entsprechend dazu kann das Gehäuse 48 zur Montage an einer Gebäudewand oder auf einem Fussboden vorgesehen sein. Für die Bodenmontage kann das Gehäuse 48 z.B. als freistehende und säulenförmig gestaltete Struktur ausgebildet sein. Dadurch, dass das Funk-Netzwerkgerät 30 im Gehäuse 48 untergebracht ist, bleibt die genannte Doppelfunktion des Stockwerkterminals 16 einem Betrachter verborgen. In einer anderen Ausführung kann das Gehäuse 48 an einem Türrahmen der Aufzugstür 14 angeordnet sein. In einem weiteren Ausführungsbeispiel kann das Stockwerkterminal 16 mit oder ohne Gehäuse 48 in einem Türrahmen integriert sein.

Das Aufzugsbedienterminal 30 hat ein Nutzerinterface 44, eine Verarbeitungseinrichtung 40 und ein Aufzugsdateninterface 42, wobei das Nutzerinterface 44 und das Aufzugsdateninterface 42 mit der Verarbeitungseinrichtung 40 verbunden sind. Das Aufzugsdateninterface 42 ist ausserdem mit dem Aufzugssteuerungsnetzwerk 33 verbindbar. Aus Sicht eines Nutzers, der von einem Stockwerk 1 auf ein anderes Stockwerk 1 fahren möchte, dient das Nutzerinterface 44 dazu, ihm die Eingabe eines Rufs zu ermöglichen und ihm den Ruf zu bestätigen, z.B. durch Anzeige der Kennung der zugewiesenen Kabine 20 und/oder durch Aktivierung einer gedrückten Taste, so dass diese z.B. aufleuchtet. Um diese Funktionen zu erfüllen, kann das Nutzerinterface 44 unterschiedliche Komponenten aufweisen, beispielsweise eine Tastatur, einen berührungsempfindlichen Bildschirm (Touch Screen), eine Datenerfassungseinrichtung oder eine Kombination dieser Komponenten.

Die Datenerfassungseinrichtung kann ein Lesegerät umfassen, das Daten basierend auf einer von unterschiedlichen bekannten Technologien erfassen kann. Das Lesegerät kann beispielsweise Daten von Magnetkarten, Chipkarten, RFID Karten oder mobilen elektronischen Geräten (z. B. Mobiltelefone, Smartphone, Tablet) lesen, oder Daten von optischen Codes (Barcodes, QR Codes, Farbcodes), die auf verschiedenen Trägermaterialien aufgedruckt sind oder auf Anzeigen von mobilen elektronischen Geräten (z. B. Mobiltelefone, Smartphone, Tablet) dargestellt werden, erfassen. Das Lesegerät kann in einem anderen Ausführungsbeispiel eine Vorrichtung zum Erfassen und/oder Erkennen von biometrischen Parametern (z. B. Muster von Fingerkuppen, Handflächen oder Augen (Iris), oder Charakteristika von Stimmen) umfassen. Unabhängig von der Art des Lesegeräts kann die Datenerfassungseinrichtung beispielsweise an der Tür 2 verwendet werden.

Kommt im Lesegerät beispielsweise die Radio Frequency Identification (RFID) Technologie zur Anwendung, ist das Lesegerät ein RFID Leser, der Daten von einer in Funkreichweite platzierten RFID Karte empfängt. Die Daten, beispielsweise einen Identifikationscode umfassend, sind in einem Datenspeicher der RFID Karte gespeichert. Die vom RFID Leser und der RFID Karte verwendete Funkfrequenz beträgt beispielsweise 125 kHz, 13,56 MHz oder 2,45 GHz. Kommt dagegen eine optische Technologie zur Anwendung, ist das Lesegerät ein optisches Lesegerät (z. B. eine Kamera oder ein Scanner), das das Muster eines optischen Codes, der auf einem Trägermaterial aufgedruckt ist oder auf einem elektronischen Gerät angezeigt wird, erfasst. Eine beispielhafte Technologie zum Erzeugen und Erfassen eines auf einem elektronischen Gerät angezeigten optischen Farbcodes ist in WO 2015/049186 beschrieben.

Um einen Ruf einzugeben, bringt der Nutzer z.B. die RFID Karte in Funkreichweite, und der RFID Leser des Nutzerinterfaces 44 empfängt die gelesenen Daten (Identifikationscode), die die Verarbeitungseinrichtung 40 zur Aufzugssteuerung 12 weiterleitet. Je nach Ausgestaltung der Aufzugsanlage 10 kann mit Hilfe des Identifikationscodes überprüft werden, ob der Nutzer zur Fahrt auf das gewünschte Stockwerk berechtigt ist. Liegt diese Berechtigung vor und hat die Aufzugssteuerung 12 dem Ruf eine Kabine 20 zugewiesen, steuert die Verarbeitungseinrichtung 40 das Nutzerinterface 44 an, um den Nutzer über die zugewiesene Kabine 20 zu informieren.

Das Funk-Netzwerkgerät 30 hat ein Dateninterface 38, eine Verarbeitungseinrichtung 36 und einen Funktransceiver 34, d.h. eine Sende-/Empfangseinrichtung für Funksignale, wobei das Dateninterface 44 und der Funktransceiver 34 mit der Verarbeitungseinrichtung 36 verbunden sind. Das Dateninterface 38 ist ausserdem mit dem Datennetzwerk 23 verbindbar. Je nach Ausgestaltung des Stockwerkterminals 16 kann die Verarbeitungseinrichtung 36 des Funk-Netzwerkgeräts 30 mit der Verarbeitungseinrichtung 40 des Aufzugsbedienterminals 32 gekoppelt sein. In Fig. 2 ist dies durch eine gestrichelt gezeichnete Verbindung 46 dargestellt.

Der Funktransceiver 34 erzeugt auf dem Stockwerk 1 ein lokales Funknetz, das zur Kommunikation mit den dort installierten Kommunikationseinrichtungen 6, 8 dient. Das Funk-Netzwerkgerät 30 kann somit als ein (Netzwerk) Router betrachtet werden, der das Funknetz auf einem Stockwerk 1 an das Datennetzwerk 23 koppelt. Falls im Funknetz und im Datennetzwerk 23 unterschiedliche Netzwerkprotokolle (z.B. Ethernet, ATM) verwendet werden, passt die Verarbeitungseinrichtung 36 diese aneinander an. Bekannte Funknetze sind beispielsweise ZigBee nach dem Standard IEEE 802.15.4, Wireless Local Area Network (WLAN) nach dem Standard IEEE802.11, Worldwide Interoperability for Microwave Access (WIMAX) nach dem Standard IEEE802.16 mit einer Reichweite von mehreren 100 Metern bis zu mehreren 10 Kilometern. Die vom Funknetz verwendete Funkfrequenz liegt bei einem WLAN beispielsweise im 2.4 GHz-Band oder im 5.0 GHz-Band und bei WIMAX im 10 bis 66 GHz-Band.

Ist das Funknetz ein WLAN (WiFi) Funknetz, kann es von mobilen Geräten (z.B. Mobiltelefonen, Smartphones, Tablet PCs) genutzt werden. Solche mobilen Geräte haben üblicherweise für WLAN Netze ausgelegte Kommunikationseinrichtungen. Über das Funknetz und das Datennetzwerk 23 können die mobilen Geräte von einem Stockwerk 1 bzw. einer Zone oder Raum des Stockwerks 1 aus beispielsweise Zugang zum Internet bekommen.

Auf einem mobilen Gerät kann auch eine anwendungsspezifische Software (auch als "App" bekannt) installiert sein, die die Bedienung der Aufzugsanlage 10 ermöglicht. Ein Nutzer kann mit dieser App beispielsweise einen Zielruf eingeben. In einer Ausgestaltung des Kommunikationssystems kommuniziert die App über das Funknetz mit dem Funk-Netzwerkgerät 30. Dessen Verarbeitungseinrichtung 36 erkennt, dass es sich um einen Zielruf handelt, und leitet den Ruf über die Verbindungsleitung 46 an die Verarbeitungseinrichtung 40 des Aufzugsbedienterminals 32 weiter.

Erneut Bezug nehmend auf Fig. 1, im dort gezeigten Ausführungsbeispiel ermöglichen die Türen 2 Zugang zu den Wohnungen, Büros oder anderen zugangsbeschränkten Zonen. Der Fachmann erkennt, dass in anderen Ausführungsbeispielen Schranken, Drehkreuze, Drehtüren oder andere Barrieren verwendet werden können, um Zugang zu gewähren oder zu blockieren. In weiteren Ausführungsbeispielen können solche Barrieren durch elektronische Überwachungseinrichtungen, beispielsweise Lichtschranken, Bewegungsmelder oder optische Einrichtungen (3D Kameras, Videokameras) ergänzt oder ersetzt werden. Je nach Gebäude können derartige Alternativen auch in Kombination verwendet werden. Auch diese Einrichtungen können mit einer Kommunikationseinrichtung 6, 8 ausgestattet sein, um mittels Funkverbindungen und dem Funk-Netzwerkgerät 30 mit der Gebäudesteuereinrichtung 24 zu kommunizieren.

In Fig. 1 ist die Gebäudesteuereinrichtung 24 im Gebäude installiert. Der Fachmann erkennt, dass die Gebäudesteuereinrichtung 24 auch ausserhalb des Gebäudes, beispielsweise in einer entfernt angeordneten Servicezentrale installiert sein kann. In einem solchen Fall erfolgt die Kommunikation zwischen der Gebäudesteuereinrichtung 24 und den verschiedenen Einheiten und Vorrichtungen im Gebäude über ein Kommunikationsnetzwerk 26 (z. B. das Internet und/oder ein WAN).

Mit dem Verständnis der oben beschriebenen prinzipiellen Systemkomponenten und deren Funktionalitäten, erfolgt im Folgenden anhand von Fig. 3 eine Beschreibung eines beispielhaften Verfahrens zum Installieren eines Kommunikationssystems in einem Gebäude, in dem eine Aufzugsanlage 10 vorgesehen ist. Die Installation des Kommunikationssystems kann beispielsweise während der Zeit erfolgen, in der das Gebäude erstellt wird, oder im Rahmen einer Modernisierung des Gebäudes, wenn beispielsweise die Aufzugsanlage 10 modernisiert wird. Wie oben erwähnt, kann bei der Modernisierung die Aufzugsanlage 10 von einer konventionellen Auf/Ab Rufsteuerung zu einer Zielrufsteuerung umgerüstet werden. Die Umrüstung der Aufzugsanlage 10 kann daher dazu genutzt werden, um eine weitere Funktionalität im Gebäude mit relativ geringem konstruktiven Aufwand zur Verfügung zu stellen.

Ein beispielhaftes Vorgehen bei einer solchen Umrüstung ist z.B. in EP 1319624 B1 beschrieben. Dort ist insbesondere auf der elektrischen Signalebene angegeben, welche Einrichtungen zum Einsatz kommen und in welcher Reihenfolge. Auf diese Aspekte ist in der folgenden Beschreibung des Verfahrens nicht eingegangen. Das Verfahren beginnt in einem Schritt S1 und endet in einem Schritt S6.

In einem Schritt S2 werden die Stockwerkterminals 16 an festgelegten Orten im Gebäude installiert. In einem Ausführungsbeispiel wird auf jedem Stockwerk 1 ein Stockwerkterminal 16 installiert. In einem anderen Ausführungsbeispiel können auf einem oder mehreren Stockwerken mehrere Stockwerkterminals 16 installiert werden. Der Fachmann erkennt, dass die Stockwerkterminals 16 bei der Installation mit einer Stromversorgung (z.B. dem Stromnetz des Gebäudes) verbunden werden.

In einem Schritt S3 wird das Datennetzwerk 23 im Aufzugsschacht 28 installiert, und in einem Schritt S4 wird das Aufzugssteuerungsnetzwerk 33 im Aufzugsschacht 28 installiert. Die Installation im Aufzugsschacht 28 ist insbesondere für die Verlegung von elektrischen Kabeln in vertikaler Richtung von Vorteil. Der Fachmann erkennt, dass die Installation des Datennetzwerks 23 und des Aufzugssteuerungsnetzwerks 33 zur gleichen Zeit oder in umgekehrter Reihenfolge erfolgen kann.

In einem Schritt S5 werden die Stockwerkterminals 16 mit dem Datennetzwerk 23 und dem Aufzugssteuerungsnetzwerk 33 verbunden. Dabei wird das Datennetzwerk 23 mit dem Dateninterface 38 des Funk-Netzgeräts 30 verbunden und das Kommunikationsinterface 42 des Aufzugsbedienterminals 32 mit dem Aufzugssteuerungsnetzwerks 33.

## Patentansprüche

1. Stockwerkterminal (16) für eine Aufzugsanlage (10) in einem Gebäude, umfassend:
ein Aufzugsbedienterminal (32), das ein Nutzerinterface (44) zum Rufen einer Aufzugskabine (20), ein Aufzugsdateninterface (42) für eine Datenkommunikation mit einer Aufzugssteuerung (12) über ein Aufzugssteuerungsnetzwerk (33) und eine Verarbeitungseinrichtung (40), die mit dem Nutzerinterface (44) und dem Aufzugsdateninterface (42) gekoppelt ist, hat; und
ein Funk-Netzwerkgerät (30), das einen Funktransceiver (34) für eine Kommunikation mit einer auf einem Stockwerk (1) vorhanden Kommunikationseinrichtung (6, 8), ein Dateninterface (38) für eine Datenkommunikation mit einem Netzwerkzugangspunkt (22) über ein Datennetzwerk (23) und eine Verarbeitungseinrichtung (36), die mit dem Funktransceiver (34) und dem Dateninterface (38) gekoppelt ist, hat, wobei das Funk-Netzwerkgerät (30) der Kommunikationseinrichtung (6, 8) über das Datennetzwerk (23) und den Netzwerkzugangspunkt (22) einen Zugang zum Internet (26) ermöglicht.

2. Stockwerkterminal (16) nach Anspruch 1, ausserdem aufweisend ein Gehäuse (48), in dem das Aufzugsbedienterminal (32) und das Funk-Netzwerkgerät (30) angeordnet sind.

3. Stockwerkterminal (16) nach Anspruch 2, bei dem das Gehäuse (48) an einer Gebäudewand, einem Stockwerkfussboden oder einem Teil der Aufzugsanlage (10), der auf einem Stockwerk für einen Nutzer zugänglich ist, anbringbar ist.

4. Verfahren zum Installieren eines Kommunikationssystems in einem Gebäude, in dem eine Aufzugsanlage (10) vorgesehen ist, aufweisend:
Installieren von Stockwerkterminals (16) an festgelegten Orten im Gebäude, wobei jedes Stockwerkterminal (16) ein Aufzugsbedienterminal (32) und ein Funk-Netzwerkgerät (30) hat, wobei das Aufzugsbedienterminal (32) ein Aufzugsdateninterface (42) für eine Datenkommunikation mit einer Aufzugssteuerung (12) und wobei das Funk-Netzwerkgerät (30) ein Dateninterface (38) für eine Datenkommunikation mit einem Netzwerkzugangspunkt (22) hat, wobei das Funk-Netzwerkgerät (30) über das Datennetzwerk (23) und den Netzwerkzugangspunkt (22) einen Zugang zum Internet (26) ermöglicht;
Installieren eines Netzwerks (23, 33, 52) in einem Aufzugsschacht (28), wobei das Installieren des Netzwerks (52) ein Installieren eines Datennetzwerks (23) und ein Installieren eines Aufzugssteuerungsnetzwerks (33) im Aufzugsschacht (28) umfasst;
Verbinden des Dateninterface (38) eines jeden Stockwerkterminals (16) mit dem Netzwerk (23, 52); und
Verbinden des Aufzugsdateninterface (42) eines jeden Stockwerkterminals (16) mit dem Netzwerk (33, 52).

5. Verfahren nach Anspruch 4, ausserdem aufweisend Installieren von Kommunikationseinrichtung (6, 8) auf den Stockwerken (1), wobei jede Kommunikationseinrichtung (6, 8) für eine Funkkommunikation mit dem Funk-Netzwerkgerät (32) vorgesehen ist und über das Datennetzwerk (23) und den Netzwerkzugangspunkt (22) Zugang zum Internet (26) erhält.

6. Verfahren nach Anspruch 4, bei dem das Datennetzwerk (23) und das Aufzugssteuerungsnetzwerk (33) als voneinander getrennte Netzwerke installiert werden, so dass eine Datenübertragung im Datennetzwerk (23) getrennt von einer Datenübertragung im Aufzugssteuerungsnetzwerk (33) erfolgt.

## Claims

1. Floor terminal (16) for an elevator system (10) in a building, comprising:
an elevator operating terminal (32) which has a user interface (44) for calling an elevator cabin (20), an elevator data interface (42) for communicating data with an elevator controller (12) via an elevator control network (33), and a processing device (40) which is coupled to the user interface (44) and the elevator data interface (42); and
a radio network device (30) which has a radio transceiver (34) for communicating with a communication device (6, 8) present on a floor (1), a data interface (38) for communicating data with a network access point (22) via a data network (23), and a processing device (36) which is coupled to the radio transceiver (34) and the data interface (38), wherein the wireless network device (30) of the communication device (6, 8) enables access to the Internet (26) via the data network (23) and the network access point (22).

2. Floor terminal (16) according to claim 1, further comprising a housing (48) in which the elevator operating terminal (32) and the radio network device (30) are arranged.

3. Floor terminal (16) according to claim 2, in which the housing (48) can be attached to a building wall, to the ground of a floor or to a part of the elevator system (10) which is accessible to a user on a floor.

4. Method for installing a communication system in a building in which an elevator system (10) is provided, comprising:
installing floor terminals (16) at specified locations in the building, wherein each floor terminal (16) has an elevator operating terminal (32) and a radio network device (30), wherein the elevator operating terminal (32) has an elevator data interface (42) for communicating data with an elevator controller (12) and wherein the radio network device (30) has a data interface (38) for communicating data with a network access point (22); wherein the wireless network device (30) provides access to the Internet (26) via the data network (23) and the network access point (22);
installing a network (23, 33, 52) in an elevator shaft (28), wherein installing the network (52) comprises installing a data network (23) and installing an elevator control network (33) in the elevator shaft (28);
connecting the data interface (38) of each floor terminal (16) to the network (23, 52); and
connecting the elevator data interface (42) of each floor terminal (16) to the network (33, 52).

5. Method according to claim 4, further comprising installing a communication device (6, 8) on the floors (1), wherein each communication device (6, 8) is provided for radio communication with the radio network device (32) and accesses the Internet (26) via the data network (23) and the network access point (22).

6. Method according to claim 4, in which the data network (23) and the elevator control network (33) are installed as networks separated from one another such that data is transmitted in the data network (23) separately from data being transmitted in the elevator control network (33).

## Revendications

1. Terminal d'étage (16) pour une installation d'ascenseur (10) dans un bâtiment, comprenant:
un terminal de commande d'ascenseur (32) ayant une interface utilisateur (44) pour appeler une cabine d'ascenseur (20), une interface de données d'ascenseur (42) pour une communication de données avec un contrôleur d'ascenseur (12) via un réseau de contrôle d'ascenseur (33), et un dispositif de traitement (40) couplé à l'interface utilisateur (44) et à l'interface de données d'ascenseur (42); et
un appareil de réseau radio (30) comprenant un émetteur-récepteur radio (34) pour une communication avec un dispositif de communication (6, 8) présent sur un étage (1), une interface de données (38) pour une communication de données avec un point d'accès au réseau (22) par l'intermédiaire d'un réseau de données (23) et un dispositif de traitement (36), couplé à l'émetteur-récepteur radio (34) et à l'interface de données (38), le dispositif de réseau radio (30) permettant au dispositif de communication (6, 8) d'accéder à Internet (26) via le réseau de données (23) et le point d'accès au réseau (22).

2. Terminal d'étage (16) selon la revendication 1, comprenant en outre un boîtier (48) dans lequel sont disposés le terminal de commande d'ascenseur (32) et l'appareil de réseau radio (30).

3. Terminal d'étage (16) selon la revendication 2, dans lequel le boîtier (48) peut être monté sur un mur de bâtiment, un plancher d'étage ou une partie de l'installation d'ascenseur (10) qui est accessible à un utilisateur sur un étage.

4. Procédé d'installation d'un système de communication dans un bâtiment dans lequel un système d'ascenseur (10) est prévu, comprenant:
installer des terminaux d'étage (16) à des emplacements fixes dans le bâtiment, chaque terminal d'étage (16) ayant un terminal de commande d'ascenseur (32) et un appareil de réseau radio (30), le terminal de commande d'ascenseur (32) ayant une interface de données d'ascenseur (42) pour une communication de données avec un contrôleur d'ascenseur (12) et l'appareil de réseau radio (30) ayant une interface de données (38) pour une communication de données avec un point d'accès au réseau (22)l'appareil de réseau radio (30) permettant un accès à Internet (26) via le réseau de données (23) et le point d'accès au réseau (22);
l'installation d'un réseau (23, 33, 52) dans une cage d'ascenseur (28), dans lequel l'installation du réseau (52) comprend l'installation d'un réseau de données (23) et l'installation d'un réseau de commande d'ascenseur (33) dans la cage d'ascenseur (28);
connecter l'interface de données (38) de chaque terminal d'étage (16) au réseau (23, 52); et
connecter l'interface de données d'ascenseur (42) de chaque terminal d'étage (16) au réseau (33, 52).

5. Procédé selon la revendication 4, comprenant en outre l'installation de dispositifs de communication (6, 8) sur les étages (1), chaque dispositif de communication (6, 8) étant destiné à une communication radio avec le dispositif de réseau radio (32) et ayant accès à Internet (26) par l'intermédiaire du réseau de données (23) et du point d'accès au réseau (22).

6. Procédé selon la revendication 4, dans lequel le réseau de données (23) et le réseau de commande d'ascenseur (33) sont installés en tant que réseaux séparés l'un de l'autre, de sorte qu'une transmission de données dans le réseau de données (23) est effectuée séparément d'une transmission de données dans le réseau de commande d'ascenseur (33).
